# FASCICULE DE BREVET EUROPEEN

(11) **EP 3 802 151 B1**
(45) Date de publication et mention de la délivrance du brevet: **14.02.2024**
(21) Numéro de dépôt: 19742856.8
(22) Date de dépôt: 07.06.2019
(51) Int. Cl.: B60B 21/10, B60B 25/04, B60B 25/12

(54) **ENSEMBLE JANTE ET EXTENSEUR FLEXIBLE POUR ENSEMBLE ROULANT**
FLEXIBLER ADAPTER UND FELGENANORDNUNG FÜR EINE ROLLANORDNUNG
FLEXIBLE ADAPTER AND RIM ASSEMBLY FOR A ROLLING ASSEMBLY

(30) Priorité: 08.06.2018 FR 1855038
(43) Date de publication de la demande: 14.04.2021
(73) Titulaire: Maxion Wheels Holding GmbH, 53639 Königswinter (DE)
(72) Inventeur: WALSER, Daniel, 63040 CLERMONT-FERRAND CEDEX 9 (FR); VITS, Johan, 2530 Boechout (BE); VEDY, Bertrand, 63040 CLERMONT-FERRAND CEDEX 9 (FR)
(74) Mandataire: Patentanwälte Buschhoff Hennicke Althaus
(86) Numéro de dépôt international: PCT/FR2019/051381
(87) Numéro de publication internationale: WO 2019/234370

(56) Documents cités:
- EP-A1- 0 518 098
- EP-B1- 0 518 098
- EP-B1- 3 645 304
- WO-A1-2018/020152
- WO-A1-2019/002792
- WO-A1-2019/002792
- WO-A2-00/41467
- FR-A1- 2 491 836
- FR-A3- 3 052 392

## Description

### Domaine de l'invention

L'invention a pour objet un ensemble constitué par une jante rigide et un extenseur flexible destiné à constituer avec un pneumatique un ensemble roulant. Un pneumatique comprend, comme on le sait, deux bourrelets destinés à être montés sur des sièges. La présente invention concerne les ensembles roulants dans lesquels un bourrelet de pneumatique n'est pas monté directement sur une jante, rigide, mais est monté sur un extenseur flexible, lequel est monté sur jante.

Un pneumatique, une jante, ainsi qu'un extenseur dont il est question dans la présente invention sont usuellement décrits par une représentation dans un plan méridien, c'est-à-dire un plan contenant l'axe de rotation du pneumatique. Tous ces produits (un pneumatique, une jante, un extenseur) sont des objets ayant une géométrie de révolution par rapport à leur axe de rotation. Les directions radiale et axiale désignent respectivement les directions, la première, perpendiculaire à l'axe de rotation du pneumatique, et la seconde, parallèle à l'axe de rotation du pneumatique. Dans ce qui suit, les expressions « radialement », et « axialement » signifient respectivement « selon une direction radiale », et « selon la direction axiale ». Les expressions « radialement intérieur, respectivement radialement extérieur » signifient « plus proche, respectivement plus éloigné, de l'axe de rotation du pneumatique, selon une direction radiale ». Un plan médian est un plan perpendiculaire à l'axe de rotation du pneumatique, positionné axialement de façon à couper la surface de la bande de roulement sensiblement à mi-distance des bourrelets d'un pneumatique. Les expressions « axialement intérieur, respectivement axialement extérieur » signifient « plus proche, respectivement plus éloigné, du plan médian du pneumatique, selon la direction axiale ». Les expressions « radialement intérieur, respectivement radialement extérieur » signifient « plus proche, respectivement plus éloigné, de l'axe de rotation, selon la direction radiale ». Enfin, rappelons encore que, par « coupe radiale » ou « section radiale », on entend une coupe ou une section selon un plan qui contient l'axe de rotation de la jante (et du pneumatique dont celle-ci est équipée).

### État de la technique

Dans le document WO2016/046197, il est proposé d'insérer un extenseur flexible entre un bourrelet de pneumatique et une jante. Le lecteur se reportera par exemple à la figure 5 de ce document pour prendre connaissance d'un ensemble roulant appartenant au domaine de l'invention. On y voit un ensemble roulant comprenant un pneumatique, une jante et deux extenseurs identiques. En considérant les conventions de langage rappelées ci-dessus, et en se reportant à la façon dont on monte sur une jante un tel extenseur, un tel extenseur comprend, axialement de l'intérieur vers l'extérieur, une extrémité axialement intérieure appelée « bourrelet d'extenseur » et destinée à assurer l'accrochage de l'extenseur sur la jante. Un tel extenseur comprend aussi une extrémité axialement extérieure. Un corps relie les deux extrémités respectivement axialement intérieure et axialement extérieure. Le corps coopère avec l'extrémité axialement extérieure pour recevoir et immobiliser axialement un bourrelet de pneumatique.

Les extenseurs sont montés sur une jante qui est la plupart du temps une pièce en aluminium. La jante présente une gorge de montage prolongée de chaque côté par un bossage, un siège sur jante sensiblement tronconique et un rebord de jante destiné à assurer en particulier l'immobilisation axialement du bourrelet d'extenseur.

Dans l'exemple présenté dans ce document, le rebord de jante est de type « B », tel que défini par l'ETRTO. Le siège sur jante présente une inclinaison de -5°, l'angle étant compté positivement lorsque le sommet virtuel du tronc de cône est disposé axialement extérieurement relativement au rebord de jante.

Le montage de l'ensemble roulant comporte plusieurs étapes. On commence par disposer les deux extenseurs flexibles sur les deux sièges sur jantes. Pour cela on introduit le premier extenseur à l'intérieur de la gorge de montage de la jante, puis on met en place progressivement le bourrelet d'extenseur sur le siège sur jante en poussant axialement l'extrémité axialement intérieure de l'extenseur jusqu'à le positionner complètement sur le siège sur jante de la jante. Puis on fait de même pour le second extenseur. La partie finale de la mise en place des bourrelets d'extenseurs peut être réalisée avec une machine de montage usuelle de pneumatiques sur des jantes. Enfin on effectue le montage du pneumatique pour positionner ses deux bourrelets contre les deux extrémités axialement extérieures des deux extenseurs en reposant sur la face radialement extérieure des deux corps des extenseurs flexibles.

Comme dans le cas du montage des pneumatiques sur leurs jantes sans l'intermédiaire d'extenseurs, la mise en pression des ensembles roulants doit permettre de plaquer les bourrelets des pneumatiques ainsi que les extrémités intérieures des extenseurs flexibles contre leurs faces d'appui respectives.

On a cependant constaté que le positionnement des bourrelets d'extenseurs n'est pas toujours clairement défini et non toujours identiquement en place tout au long de leurs périmètres. Cela conduit à des irrégularités géométriques. Ces irrégularités rendent difficiles de statuer sur la conformité ou non des ensembles roues et extenseurs avant le montage des pneumatiques. Elles peuvent aussi contribuer à des vibrations au roulage pour raison de non-uniformités.

Les observations du déposant l'ont ainsi amené à s'écarter des règles de construction des jantes.

Les documents WO2019/002792 et FR 2491836 décrivent des ensembles roulants selon le préambule de la revendication 1.

### Description brève de l'invention

L'objectif de la présente invention est de définir une jante pour ensemble roulant avec extenseur flexible, ayant une bonne capacité de guidage tout en étant résistant aux chocs de trottoir, et tout en assurant un montage précis et endurant de l'extenseur sur une jante.

L'invention a pour objet l'ensemble d'une jante et d'un extenseur flexible destiné à constituer avec un pneumatique un ensemble roulant, la jante ayant un axe de rotation DD' et un plan médian P. La jante comporte une gorge de montage prolongée axialement au moins d'un côté du plan médian par un bossage, un siège sur jante sensiblement tronconique, et un rebord sur jante prolongeant axialement extérieurement le siège sur jante. L'extenseur comporte une extrémité axialement intérieure destinée à reposer sur le siège sur jante, une extrémité axialement extérieure, et un corps sensiblement cylindrique reliant l'extrémité axialement intérieure et l'extrémité axialement extérieure et destiné à recevoir en coopération avec l'extrémité axialement extérieure un bourrelet de pneumatique. Cet ensemble est caractérisé en ce que le siège sur jante sensiblement tronconique de la jante présente une inclinaison α relativement à l'axe de rotation DD' comprise entre +4 et +6 degrés, l'angle α étant compté positivement lorsque le sommet virtuel S du siège sensiblement tronconique est situé axialement extérieurement.

La diminution de l'inclinaison du siège sur jante limite voire s'oppose aux déplacements axiaux vers l'intérieur de la jante après le montage de l'extenseur flexible sur la jante. Le bourrelet d'extenseur mis en place sur l'ensemble de la circonférence du siège sur jante de la jante reste ainsi en place ; il est bloqué axialement en position contre la face d'appui sensiblement radiale du rebord de jante lorsque ce bourrelet d'extenseur repose sur le siège sur jante.

Ce blocage en position contre la face d'appui radiale du rebord de jante a l'avantage de définir précisément la position de cette extrémité intérieure ou bourrelet d'extenseur de l'extenseur flexible dès son montage sur la jante sans devoir compter sur la mise en pression de l'ensemble roulant. Cela permet d'améliorer très sensiblement la qualité du montage de l'ensemble roulant en réduisant les irrégularités de positions géométriques ainsi que les vibrations parasites en roulage associées.

Cette inclinaison du siège sur jante a l'avantage de s'opposer à tout déplacement axial vers l'intérieur du bourrelet d'extenseur de l'extenseur lors de son montage et après.

Selon un mode de réalisation connu, le siège sur jante est sensiblement cylindrique.

Selon un mode de réalisation additionnel, la largeur axiale entre la face d'appui radiale du rebord de jante et le cercle de diamètre maximal du bossage de la jante est inférieure à 17 mm, et de préférence compris entre 15 et 16 mm.

Cela a l'avantage de rendre difficile le montage d'un bourrelet de pneumatique sur l'un des sièges sur jante de la jante en raison aussi de l'aspect visuel très différent de celui usuel.

Selon un mode de réalisation préférentiel, la largeur axiale du siège sur jante sensiblement tronconique est inférieure à la largeur axiale de l'extrémité intérieure de l'extenseur flexible, largeur mesurée lorsque l'extenseur est libre.

Cette largeur axiale inférieure aux réalisations actuelles de sièges de jante permet de garantir que lorsque l'extrémité axialement intérieure de l'extenseur est mise en place dans le volume du siège sur jante entre la face radiale du rebord de jante et le bossage, cette position est unique et ne peut plus bouger.

Selon un mode de réalisation avantageux, la face radialement intérieure de l'extrémité intérieure de l'extenseur flexible comporte une portion tronconique de largeur axiale inférieure à la largeur axiale du siège sur jante de la jante et d'inclinaison similaire à celle du siège sur jante de la jante.

Cela a l'avantage de faciliter la mise en place bonne et définitive du bourrelet d'extenseur sur le siège sur jante de la jante.

Chaque extenseur est flexible ; on entend par là qu'il est déformable élastiquement en permettant, vu en coupe méridienne, une flexion et un déplacement radial sans quitter le domaine élastique, aux sollicitations de service, lors de l'usage du pneumatique gonflé à pression nominale. A noter que la déformation axiale de l'extenseur est pratiquement négligeable en fonctionnement normal du pneumatique gonflé à pression nominale.

La jante est de préférence constituée en un matériau choisi parmi l'acier ou les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales ou parmi toutes combinaisons de matériaux.

En ce qui concerne d'autres aspects de la jante en soi ou de l'extenseur en soi, le lecteur est renvoyé aux documents WO2015/086662 et WO2016/046197 précités.

### Description des Figures

L'invention est décrite ci-après à l'aide des figures 1 à 5, données uniquement à titre d'illustration :
- la figure 1 est une coupe méridienne d'un ensemble roulant avec un ensemble jante et extenseur flexible non couvert par l'invention ;
- la figure 2 présente une coupe méridienne, partielle, d'une jante non couvert par l'invention ;
- la figure 3 présente une coupe d'un extenseur flexible selon l'invention, à l'état libre ;
- la figure 4 est une coupe méridienne, partielle, dans laquelle la coupe d'un extenseur flexible à l'état libre est superposée à celle d'une jante ; et
- la figure 5 présente une coupe méridienne, partielle, d'une jante et d'un extenseur monté sur la jante selon l'invention.

### Description détaillée de l'invention

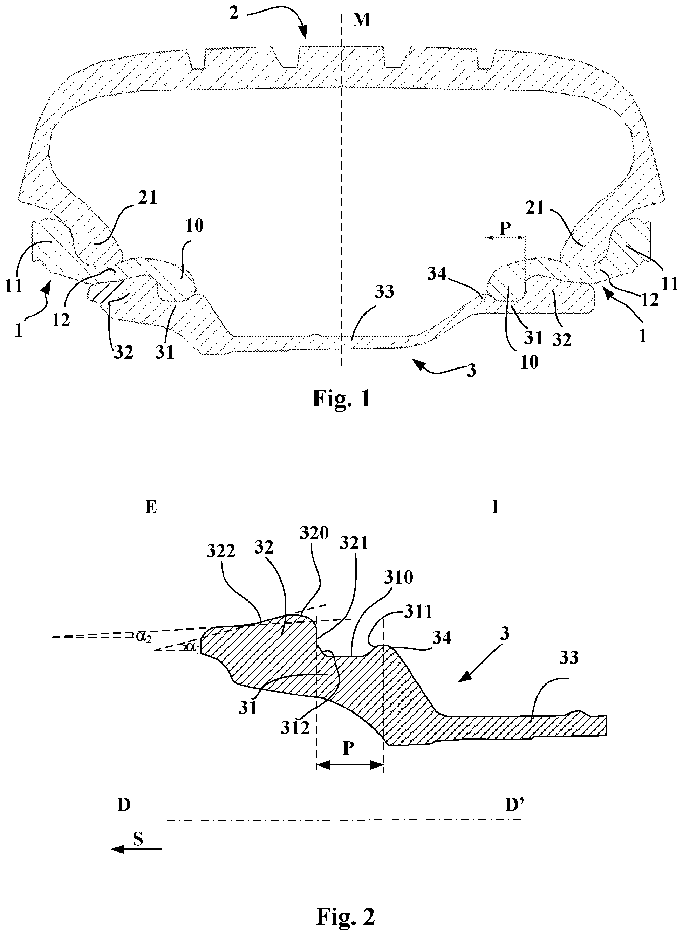

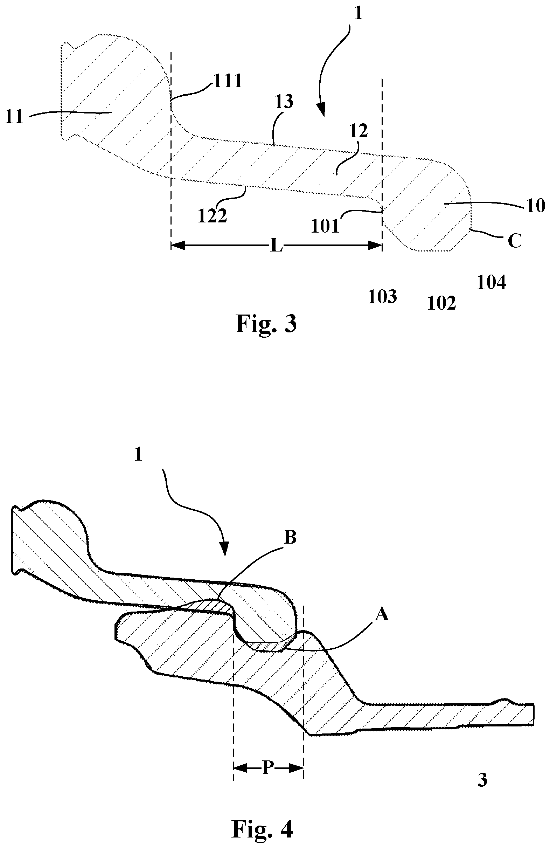

La figure 1 montre un ensemble roulant non couvert par l'invention. Cet ensemble comprend deux extenseurs 1 identiques, un pneumatique 2 et une jante 3. Le pneumatique 2 comporte deux bourrelets 21. De façon générale, signalons que le choix de largeur de jante est tel que, compte tenu de la largeur L des extenseurs (voir figure 3), le pneumatique se trouve dans une configuration aussi semblable que possible à la configuration qu'il aurait s'il était monté directement, sans extenseurs, sur une jante appropriée. La jante 3 comporte une gorge de montage 33, prolongée de part et d'autre du plan médian M par deux bossages 34, deux sièges sur jante 31, chacun prolongé par un rebord 32 de jante. Chaque extenseur 1 comporte une extrémité intérieure ou bourrelet d'extenseur 10, une extrémité extérieure 11 et un corps 12 reliant les deux extrémités 10 et 11.

Dans ce qui suit, on appelle « siège sur jante » et « rebord de jante » la face radialement extérieure de la zone 31 du siège sur jante et de la zone 32 du rebord de jante ainsi que ces zones 31 et 32.

En consultant plus particulièrement la figure 2, le siège sur jante 31 comporte une portion 310 sensiblement cylindrique prolongée axialement intérieurement par une zone de liaison 311 avec le bossage 34 et axialement extérieurement par une zone de liaison 312 avec le rebord de jante 32. La largeur axiale du siège sur jante P, y compris les deux zones de liaison 311 et 312 est de 15,3 mm. Ce siège sur jante est notablement plus étroit que les sièges de jantes usuels dont la largeur axiale est au minimum de 19,5 mm pour des jantes de largeur supérieure à 4,5 pouces, cela rend difficile un montage éventuel d'un pneumatique directement sur la jante 3. Le rebord 32 de jante comporte une première portion 321 orientée sensiblement dans un plan perpendiculaire à l'axe de rotation DD' de l'ensemble roulant, et située radialement à l'extérieur par rapport audit siège sur jante 310. Le rebord 32 de jante comporte une seconde portion 322 sensiblement tronconique, située axialement à l'extérieur par rapport à ladite première portion 321 et située au moins en partie radialement à l'extérieur par rapport audit siège sur jante 31, ladite seconde portion 322 étant sensiblement tronconique. Dans l'exemple de réalisation présenté, cette seconde portion comprend deux portions tronconiques, la première d'angle α₁ valant 15° suivi axialement extérieurement par la seconde d'angle α₂ valant 5°. La jante comporte aussi une portion de raccordement 320 entre ladite première portion 321 et ladite seconde portion 322. La largeur axiale WR du rebord 32 est 18,3 mm.

Les repères E et I à la figure 2 indiquent le côté axialement extérieur de la jante, respectivement le côté axialement intérieur. La seconde portion 322 est inclinée axialement vers l'extérieur : ainsi, en la prolongeant axialement vers l'extérieur, on rejoint l'axe DD' (position non à l'échelle par rapport à la jante 3) en un sommet virtuel S rejeté axialement très loin vers l'extérieur, ce qui est symbolisé par une flèche sous S à la figure 2.

L'invention peut être utilisée avec de nombreuses variantes de constitution interne du pneumatique 2, qui ne sont donc pas représentées, ainsi qu'avec de nombreuses variantes de constitution interne d'extenseur 1, qui ne sont donc pas représentées.

En revenant à la figure 3, on voit que chaque extenseur 1 comporte une extrémité axialement intérieure 10 destinée à être montée sur l'un desdits sièges sur jante 31. Il comporte une extrémité axialement extérieure 11 et un corps 12 orienté sensiblement axialement et disposé entre ladite extrémité axialement extérieure 11 et ladite extrémité axialement intérieure 10. Le corps 12 a une face radialement intérieure 122. L'extrémité axialement intérieure 10 de l'extenseur a une face de positionnement axial 101 sensiblement perpendiculaire à l'axe de rotation DD', une face de positionnement radial 102 sensiblement cylindrique et de largeur axiale inférieure à la largeur axiale du siège sur jante cylindrique 310. La face de positionnement radial 102 est prolongée des deux côtés par des faces de liaisons 103 et 104 qui s'étendent radialement et axialement jusqu'à la face de positionnement axial 101, du côté extérieur, et jusqu'au point C, extrémité axiale intérieure du bourrelet d'extenseur du côté intérieur L'extrémité axialement extérieure 11 présente un épaulement 111 formant en partie une face sensiblement perpendiculaire à l'axe de rotation DD'. Ledit extenseur 1 comporte un siège sur extenseur 13. A la figure 3, l'extenseur 1 est tel que sorti de cuisson et le corps 12 est sensiblement cylindrique. On entend par L, largeur de l'extenseur, la distance axiale entre la face de positionnement axial 101 du bourrelet d'extenseur 10 qui est destinée à être plaquée axialement contre la face radiale 321 du rebord 32 de la jante et l'épaulement 111, radial lui-aussi, destiné à bloquer axialement le bourrelet 21 du pneumatique 2. La distance 2xL correspond sensiblement à la diminution de largeur de la jante 3 par rapport à une jante usuelle pour le pneumatique considéré 2.

La figure 4 montre la superposition d'un extenseur à l'état libre 1 tel que représenté à la figure 3 et d'un siège et d'un rebord de jante tels que représentés à la figure 2. Cette figure a l'avantage de montrer les deux zones A et B d'interférences entre l'extenseur et la jante. A la zone A, on constate que la face de positionnement radial 102 subit une forte contraction lors de son montage sur le siège sur jante, ce qui plaque la face de positionnement axial 101 de l'extenseur contre la face d'appui 321 du rebord de jante 32. En conséquence, le bourrelet d'extenseur 10 une fois mis en place sur le siège sur jante 31 est dans sa position définitive et ne peut plus bouger axialement et est dans sa position de travail définitive. Il n'est ainsi plus nécessaire de compter sur la pression de gonflage pour mettre en place le bourrelet d'extenseur sur le siège sur jante et cela garantit une diminution sensible des défauts d'uniformité de l'ensemble roulant. Cela permet aussi de statuer sur la conformité ou non des ensembles roues/extenseurs d'un point de vue géométrique avant le montage des pneumatiques.

A la zone B, le corps 12 de l'extenseur s'enroule sur le rebord de jante pour former un bossage comparable et de même fonctionnalité que les bossages ou « humps » des jantes usuelles.

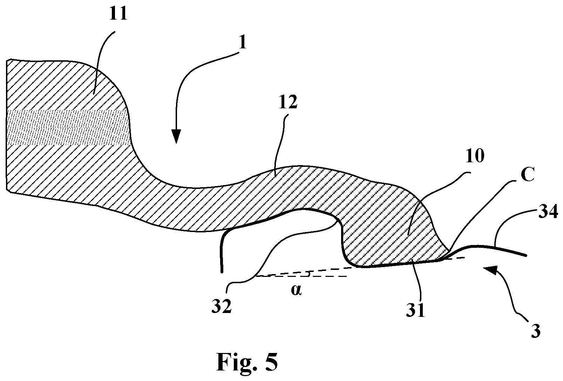

La figure 5 présente le contour extérieur d'une jante 3 avec un bossage 34, un siège sur jante 31 et un rebord de jante 32 selon l'invention. Un extenseur flexible 1 est monté sur ce contour extérieur de jante et est représenté à l'état déformé. On voit en particulier le bossage sur la face radialement extérieure du corps 12, bossage lié à la forme de la face d'appui du rebord de jante 32. Ce mode de réalisation de la jante 3 est tel que le siège sur jante 31 est tronconique avec un angle d'inclinaison α égal dans ce mode de réalisation à + 5°. Cette inclinaison du siège sur jante opposée à celle des sièges de jante usuels s'oppose aux déplacements axiaux vers l'intérieur de la jante après le montage de l'extenseur flexible sur la jante. Il est souhaitable de ne pas augmenter au-delà de 6° l'inclinaison du siège sur jante en raison de la plus grande difficulté à mettre en place le bourrelet d'extenseur lorsque cette inclinaison augmente.

L'ensemble jante et extenseur selon l'invention permet donc d'améliorer de manière très notable le comportement en roulage de l'ensemble roulant tout en maintenant intactes toutes les autres propriétés de cet ensemble roulant, notamment une très bonne capacité de résistance aux chocs. L'invention s'étend aussi à la jante elle-même, adaptée pour son utilisation dans un ensemble tel que décrit dans le présent mémoire. Une telle jante, d'axe de rotation DD', comporte une gorge de montage prolongée axialement au moins d'un côté du plan médian par un bossage, un siège sur jante sensiblement tronconique, et un rebord sur jante prolongeant axialement extérieurement le siège sur jante, destiné à recevoir un extenseur, caractérisée en ce que le siège sur jante est sensiblement tronconique et présente une inclinaison α relativement à l'axe de rotation DD' comprise entre +4 et +6 degrés, l'angle α étant compté positivement lorsque le sommet virtuel S du siège sensiblement tronconique est situé axialement extérieurement.

## Revendications

1. Ensemble d'une jante (3) et d'un extenseur (1) flexible destiné à constituer avec un pneumatique (2) un ensemble roulant, ladite jante ayant un axe de rotation DD' et un plan médian M,
ladite jante (3) comportant une gorge de montage (33) prolongée axialement au moins d'un côté dudit plan médian par :
- un bossage (34) ;
- un siège sur jante (31) sensiblement tronconique ; et
- un rebord sur jante (32) prolongeant axialement extérieurement ledit siège sur jante
avec une face d'appui d'orientation sensiblement radiale ; ledit extenseur(1) comportant :
- une extrémité axialement intérieure (10) destinée à reposer sur le siège sur jante (31) ;
- une extrémité axialement extérieure (11) ; et
- un corps (12) sensiblement cylindrique reliant ladite extrémité axialement intérieure (10) et ladite extrémité axialement extérieure (11) et destiné à recevoir en coopération
avec l'extrémité axialement extérieure (12) un bourrelet (21) de pneumatique ;
**caractérisé en ce que** le siège sur jante (31) sensiblement tronconique de ladite jante présente une inclinaison (α) relativement à l'axe de rotation DD' comprise entre, +4 et +6 degrés ledit angle (α) étant compté positivement lorsque le sommet virtuel S dudit siège sensiblement tronconique est situé axialement extérieurement.

2. Ensemble selon la revendication 1, dans lequel la largeur axiale entre la face d'appui radiale du rebord de jante (32) et le cercle de diamètre maximal du bossage (34) de la jante (3) est inférieure à 17 mm.

3. Ensemble selon la revendication 2, dans lequel la largeur axiale entre la face d'appui radiale du rebord de jante (32) et le cercle de diamètre maximal du bossage (34) de la jante (3) est compris entre 15 et 16 mm.

4. Ensemble selon l'une quelconque des revendications précédentes, dans lequel la largeur axiale du siège sur jante (31) sensiblement tronconique est inférieure à la largeur axiale de l'extrémité intérieure (10) dudit extenseur flexible, largeur mesurée lorsque ledit extenseur est libre.

5. Ensemble selon l'une quelconque des revendications précédentes, dans lequel la face radialement intérieure de ladite extrémité intérieure (10) dudit extenseur (1) flexible comporte une portion tronconique de largeur axiale inférieure à la largeur axiale dudit siège sur jante (31) de ladite jante (3) et d'inclinaison similaire à celle dudit siège sur jante (31) de ladite jante (3), ledit extenseur (1) étant à l'état libre.

## Patentansprüche

1. Anordnung aus einer Felge (3) und einem flexiblen Expander (1), die dazu bestimmt ist, eine rollende Einheit mit einem Reifen (2) zu bilden, wobei die Felge eine Drehachse DD' und eine Mittelebene M aufweist, wobei die Felge (3) eine Montagenut (33) aufweist, die sich axial auf mindestens einer Seite der Mittelebene erstreckt durch:
- einen Vorsprung (34);
- einen im Wesentlichen kegelstumpfförmigen Felgensitz (31); und
- einen Felgenflansch (32), der sich von dem Felgensitz axial nach außen erstreckt und eine im Wesentlichen radial ausgerichtete Lagerfläche aufweist;
wobei der Expander (1) umfasst
- ein axial inneres Ende (10), das dazu bestimmt ist, auf dem Felgensitz (31) aufzuliegen;
- ein axiales äußeres Ende (11); und
- einen im Wesentlichen zylindrischen Körper (12), der das axial innere Ende (10) und das axial äußere Ende (11) verbindet und dazu bestimmt ist, im Zusammenwirken mit dem axial äußeren Ende (12) einen Reifenwulst (21) aufzunehmen;
**dadurch gekennzeichnet, dass** der im Wesentlichen kegelstumpfförmige Felgensitz (31) der Felge eine Neigung (α) in Bezug auf die Drehachse DD' zwischen +4 und +6 Grad aufweist, wobei der Winkel (α) positiv ist, wenn sich der virtuelle Scheitelpunkt S des im Wesentlichen kegelstumpfförmigen Sitzes axial außen befindet.

2. Anordnung nach Anspruch 1, bei der die axiale Breite zwischen der radialen Auflagefläche des Felgenhorns (32) und dem größten Kreisdurchmesser der Nabe (34) der Felge (3) weniger als 17 mm beträgt.

3. Anordnung nach Anspruch 2, wobei die axiale Breite zwischen der radialen Auflagefläche des Felgenhorns (32) und dem maximalen Durchmesser des Kreises der Nabe (34) der Felge (3) zwischen 15 und 16 mm beträgt.

4. Anordnung nach einem der vorhergehenden Ansprüche, wobei die axiale Breite des im wesentlichen kegelstumpfförmigen Felgensitzes (31) geringer ist als die axiale Breite des inneren Endes (10) des flexiblen Expanders, welche Breite gemessen wird, wenn der Expander frei ist.

5. Anordnung nach einem der vorhergehenden Ansprüche, wobei die radial innere Fläche des inneren Endes (10) des flexiblen Expanders (1) einen kegelstumpfförmigen Abschnitt aufweist, mit einer axialen Breite, die kleiner ist als die axiale Breite des Felgensitzes (31) der Felge (3), und der eine Neigung hat, die ähnlich der des Felgensitzes (31) der Felge (3) ist, sofern sich der Expander (1) im freien Zustand befindet.

## Claims

1. Assembly of a rim (3) and a flexible expander (1) intended to build a rolling assembly with a tire (2), said rim having an axis of rotation DD' and a median plane M, said rim (3) having a mounting groove (33) extended axially on at least one side of said median plane by:
- a boss (34);
- a rim seat (31) substantially frustoconical; and
- a rim flange (32) extending axially externally from said rim seat with a bearing face of substantially radial orientation;
said expander (1) comprising:
- an axially inner end (10) intended to rest on the rim seat (31);
- an axially outer end (11); and
- a substantially cylindrical body (12) connecting said axially inner end (10) and said axially outer end (11) and being intended to receive, in cooperation with the axially outer end (12), a tire bead (21); **characterized in that** the substantially frustoconical rim seat (31) of said rim has an inclination (α) relative to the axis of rotation DD' of between +4 and +6 degrees, said angle (α) being positively when the virtual vertex S of said substantially frustoconical seat is located axially on the outside.

2. Assembly according to claim 1, wherein an axial width between the radial bearing face of the rim flange (32) and the maximum diameter circle of the boss (34) of the rim (3) is less than 17 mm.

3. Assembly according to claim 2, wherein the axial width between the radial bearing face of the rim flange (32) and the maximum diameter circle of the boss (34) of the rim (3) is between 15 and 16 mm.

4. Assembly according to any one of the preceding claims, wherein the axial width of the substantially frustoconical rim seat (31) is less than the axial width of the inner end (10) of said flexible expander, which width is measured when said expander is free.

5. Assembly according to any one of the preceding claims, wherein the radially inner face of said inner end (10) of said flexible expander (1) has a frustoconical portion with an axial width smaller than the axial width of said rim seat (31) of said rim (3) and of an inclination similar to that of said rim seat (31) of said rim (3), provided said expander (1) being in the free state.
